# EUROPEAN PATENT SPECIFICATION

(11) **EP 0 568 803 B1**
(45) Date of publication and mention of the grant of the patent: **25.09.1996**
(21) Application number: 93104775.7
(22) Date of filing: 23.03.1993
(51) Int. Cl.: B42C 9/00, C08F 8/30, C09J 5/02

(54) **Book-binding process and an adhesive composition for carrying out the process**
Buchbindungsverfahren und Klebstoffzusammensetzung zur Durchführung des Verfahrens
Procédé de reliure et composition adhésive pour la mise en oeuvre dudit procédé

(30) Priority: 25.03.1992 IT TO920259
(43) Date of publication of application: 10.11.1993
(73) Proprietor: National Starch and Chemical Investment Holding Corporation, Wilmington, Delaware 19809 (US)
(72) Inventor: Pinciroli, Alberto, I-20020 Busto Garolfo MI (IT); Spreafico, Mario, I-24030 Solza BG (IT); Mosetti, Giorgio, I-20123 Milano (IT)
(74) Representative: Hagemann, Heinrich, Dr.rer.nat., Dipl.-Chem.

(56) References cited:
- EP-A- 0 019 125
- EP-A- 0 168 126
- EP-A- 0 260 797
- WO-A-85/04669
- DE-A- 2 548 801
- US-A- 3 382 215

## Description

The present invention relates to a book-binding process and in particular to an improvement in the process of gluing the spine of the book which uses a new adhesive system.

The automation of the binding process has enabled books to be produced in a continuous process starting from the printing, compilation of the pages into a book block, gluing of the spine, rounding and trimming.

The process of gluing the spine is carried out by either of two techniques, "one-shot", which requires the application of a single adhesive, and "two-shot" which requires the application to the spine of an adhesive primer, generally constituted by an aqueous emulsion or dispersion of a polymeric adhesive, and of a finish composition.

The present invention relates particularly to the stage of gluing by means of the two-shot technique.

Various combinations of adhesives have been proposed for use in this technique and, of these, particular interest has been invested in the combination of a vinylic dispersion as a primer with a hot-melt composition as the finish.

The limits and disadvantages of this adhesive system lie particularly in the slow drying speed of the primer which is responsible for a substantial reduction in the production rate in the continuous process. Moreover, it has been found that there is only a physical interaction between the primer composition and the finish which can result in insufficient bonding, particularly when the primer is insufficiently dry and when a change occurs in the compatibility of the primer and the finish in particular environmental conditions.

WO-A-85/04669 discloses a method of binding using, as a first adhesive, a water-based primer and, as a second adhesive,a hot-melt adhesive which comprises a segmented mono-alkene vinyl acetate copolymer. EP-A- 0 260 797 discloses a book-binding process comprising the use of an aqueous primer adhesive composition containing ungelatinized starch. According to said reference a layer of the primer adhesive is coalesced to a resilient hinge by the application of a hot-covering adhesive without the need for an intermediate drying step. The coalesced film of primer adhesive provides a suitable underlying substrate for the adherent covering adhesive which binds the cover stock to the finished book

The object of the present invention is to avoid these disadvantages by means of a process and an adhesive composition with better gluing properties.

A further object of the invention is to provide a process which enables the continuous production rate of books to be increased by virtue of shorter drying times for the primer composition.

A subject of the invention is a book-binding process including the gluing of the spine of the book with a two-shot system, in which a water-based adhesive primer and a hot melt adhesive finish composition are applied in series to the dorsal region of the book block, characterized in that the adhesive primer includes an isocyanic hardener.

According to the invention, the primer is constituted by an aqueous emulsion including at least two components and, more precisely, an isocyanic hardener and a polymeric adhesive resin. Any water-dispersible resin which has functional groups which can react with the isocyanic groups of the hardener may be used as the polymeric adhesive resin. Preferred resins are emulsions of anionic type which have high drying speeds and include homopolymers or copolymers of vinyl acetate with ethylenically-unsaturated monomers, in particular polyvinyl acetate, ethylene-vinyl acetate, acrylic homo or copolymers, for example acrylic acid-vinyl acetate. Particularly preferred are ethylene-vinyl acetate emulsions with from 5 to 40% by weight of ethylene. Such emulsions are available commercially in the form of aqueous dispersions typically having a solids content of between 45 and 65% by weight.

Aromatic or aliphatic isocyanates may be used as the isocyanic hardener, such as, for example, the products sold under the mark DESMODUR (Bayer-registered mark), for example polyisocyanates based on methylene di-p-phenylene isocyanate (MDI) or hexamethylene diisocyanate (HDI).

The ratio between the polymeric dispersion and the isocyanic hardener is not particularly critical; preferred weight ratios are between 100/5 and 100/20.

The primer composition may further include minor quantities of surfactants, preferably of anionic type, biocides, plasticizers, anti-foaming agents and antioxidants of the type normally used in conventional methods.

The application of the primer composition to the dorsal region of the book block is effected by the conventional method in thickness of between 50 and 800 microns. The wet primer composition is then subjected to in-line drying, for example by means of IR lamps, with drying times of the order of several seconds.

The dried primer layer is then covered with a hot-melt adhesive layer. The preferred hot-melt adhesives used in the process of the invention comprise;
A) copolymers or terpolymers of an ethylenically unsaturated monomer, preferably ethylene, with vinyl acetate; acrylic acid and/or methacrylic acid; or esters of acrylic acid and/or methacrylic acid.
B) adhesion-promotor resins and tackifiers containing groups with active hydrogen and, in general, selected from the group consisting of natural or esterified, dimerized or polymerized colophonic resins; modified phenolic styrene resins; and ketonic resins.
Optionally, there may also be present natural or synthetic paraffins and waxes containing carboxyl groups and/or hydroxyl groups.

Preferably the hot-melt finish composition includes 20 to 65% by weight of ethylenic copolymer or terpolymer; 20 to 65% by weight of tackifier resin; and 0 to 35% by weight of wax or paraffin.

Without wishing to be bound to a particular explanation of the adhesion mechanism, it is thought that the use of the isocyanic hardener of the invention as a reactive component of the system is able to promote a chemical interaction between the polymeric phase of the vinyl dispersion and the cellulose substrate of the book spine; a chemical bond between the primer and the hot-melt finish; and also crosslinking of the polymeric component of the dispersion with which the hardener is intimately associated by mixing before use.

The free isocyanic groups of the hardener are responsible for the aforesaid reactions by virtue of their ability to interact with the active chemical groups of the substrate, principally of hydroxyl type, of the hot-melt finish and of the polymeric component of the dispersion. All the reactions start as a result of the heating carried out during the gluing process but the reactions are completed in the period of several days after application. It has, in fact, been found that there is a considerable increase in the pull values after aging.

In comparison with conventional two-shot gluing systems which use a vinyl primer and hot-melt adhesives, the gluing system of the invention has substantial advantages linked in particular to a higher production speed; smaller plant investment by virtue of the possibility of using a shorter drying stage for the primer; and greater reliability and efficiency of the gluing process which does not depend too strictly on the complete drying of the primer due to the presence of the isocyanic hardener. Additional benefits include the absence of loss of effectiveness of gluing as a result of aging or in unfavorable environmental conditions, presumably because of the strong bond between the primer and the finish which prevents any variation in the physical state of the primer and of the hot-melt adhesive compromising the adhesion between the two layers as well as better bonding of the primer to the spine of the book as well as better adhesion of the primer to the ends of the printed pages.

### EXAMPLE

In order to carry out binding tests, a gluing plant was used which had a drying station with a length of 2m, which is considerably shorter than the length of drying stations needed for conventional two-shot systems. The test conditions were:

| | |
|---|---|
| drying system | IR lamp |
| primer application | by roller at ambient temperature |
| pot life of the primer | ≧ 7h |
| application of the hot-melt finish | 175°C |

The primer composition used was a composition formed from an anionic dispersion of EVA (ethylene-vinyl acetate) copolymer including a water-compatible aliphatic polyisocyanate based on hexamethylene diisocyanate. In particular:
- aqueous EVA dispersion VINAMUL: registered mark VINAMUL (National Starch),
- hardener: aliphatic polyisocyanate DESMODUR DA (Bayer Registered Mark).

In the experimental test, the preparation of the primer was carried out by mixing the aqueous dispersion mentioned above and the polyisocyanate in a weight ratio of 100/10. The hot-melt composition used had the following formulation:

| | |
|---|---|
| ethylene-vinyl acetate (28% ethylene) | 42.2 parts |
| modified phenolic styrene resin | 37.5 parts |
| wax with acid functional groups | 11.8 parts |
| antioxidant (IRGANOX) | 0.3 parts |

Further test conditions and results showing the efficiency of gluing are given in the table that follows:

| | **TEST NO. 1** | **TEST NO. 2** |
|---|---|---|
| Production speed | 5000 books/h | 4500 books/h |
| Type of gluing of the back | book bound in paper boards with non-sewn spine | book bound in paper boards with non-sewn spine |
| Book thickness | 12mm | 24mm |
| Bending value (flex) after three days | 1500 | >2000 |
| Flex after 60 days | >2000 | >2000 |
| Pull value after 3 days | 0.5 kg/cm | 0.8 kg/cm |
| Pull value after 60 days | 0.85 kg/cm | 1.05 kg/cm |
| Pull value after 60 days at 45°C (accelerate aging) | 0.85 kg/cm | 1.02 kg/cm |
| Cold Crack Strength | -6°C | -3°C |

One of the most important aspects shown by the results obtained, in addition to the high production speed and the high values achieved in the bending test, lies in the substantial increase in the results of the pull test after storage for 60 days. Moreover, the pull values are not lost after exposure of the samples to accelerated aging. Moreover, the possibility of carrying out the process with drying lengths of only two meters is an important improvement over the use of conventional two-shot systems.

## Claims

1. A process for the binding of books wherein the spine of the book is glued with a two-stage system in which a water-based adhesive primer and a hot-melt adhesive finish composition are applied in series to the dorsal region of the book block, characterized in that said adhesive primer comprises an isocyanic hardener.

2. The process according to Claim 1 wherein the adhesive primer containing the isocyanic hardener comprises an aqueous dispersion of a polymer selected from homo and copolymers of vinyl acetate, acrylic homo and copolymers.

3. The process according to Claim 2 wherein the primer includes an ethylene vinyl acetate copolymer.

4. The process according to anyone of Claims 1 to 3 wherein the primer includes an isocyanic hardener comprising a water-compatible aliphatic polyisocyanate.

5. The process according to anyone of Claims 2 to 4 wherein the weight ratio between the polymeric adhesive dispersion and the isocyanic hardener is within the range of 100:5 to 100:20.

6. The process according to anyone of the preceding claims wherein the finish Composition is a hot-melt composition comprising 20 to 65% by weight of an ethylenic copolymer; 20 to 65% by weight of tackifier resin; and, 0 to 35% by weight of wax or paraffin.

7. The process according to Claim 6 wherein the ethylenic copolymer is selected from copolymers of ethylene with one or more of the monomers selected from vinyl acetate, acrylic acid, methacrylic acid, esters of acrylic acid or esters of methacrylic acid.

8. A primer composition for two-stage gluing processes, comprising an aqueous polymeric emulsion is selected from homopolymers or copolymers of vinyl acetate, acrylic homo and copolymers, and an isocyanic hardener.

9. The composition of Claim 8 wherein the isocyanic hardener is a water-compatible aliphatic or aromatic polyisocyanate.

10. The composition of Claim 8 wherein the weight ratio between the polymeric adhesive dispersion and the isocyanic hardener is within the range of 100:5 to 100:20.

## Patentansprüche

1. Verfahren zum Binden von Büchern, worin der Rücken des Buches mit einem Zweistufensystem geleimt wird, in welchen ein Klebstoffgrundierungsmittel auf Wasserbasis und eine Schmelzkleber-Finishzusammensetzung nacheinander auf die Rückenregion des Buchblockes aufgebracht werden, dadurch gekennzeichnet, daß das Klebstoffgrundierungsmittel ein isocyanisches Härtungsmittel umfaßt.

2. Verfahren nach Anspruch 1, worin das das isocyanische Härtungsmittel enthaltende Klebstoffgrundierungsmittel eine wäßrige Dispersion eines Polymers, ausgewählt aus Homo- und Copolymeren von Vinylacetat, Acrylhomo- und Copolyeren, umfaßt.

3. Verfahren nach Anspruch 2, worin das Grundierungsmittel ein Ethylen-Vinylacetat-Copolymer einschließt.

4. Verfahren nach irgendeinem der Ansprüche 1 bis 3, worin das Grundierungsmittel ein isocyanisches Härtungsmittel einschließt, das ein wasserkompatibles aliphatisches Polyisocyanat umfaßt.

5. Verfahren nach irgendeinem der Ansprüche 2 bis 4, worin das Gewichtsverhältnis Zwischen der polymeren Klebstoffdispersion und dem isocyanischen Härtungsmittel im Bereich von 100:5 bis 100:20 liegt.

6. Verfahren nach irgendeinem der vorhergehenden Ansprüche, worin die Finishzusammensetzung eine Schmelzkleberzusammensetzung ist, die 20 bis 65 Gew.-% eines ethylenischen Copolymers, 20 bis 65 Gew.-% Klebrigmacherharz und 0 bis 35 Gew.-% Wachs oder Paraffin umfaßt.

7. Verfahren nach Anspruch 6, worin das ethylenische Copolymer aus Copoylmeren von Ethylen mit einem oder mehreren der Monomeren, ausgewählt aus Vinylacetat, Acrylsäure, Methacrylsäure, Estern der Acrylsäure oder Estern der Methacrylsäure, ausgewählt ist.

8. Grundierungsmittelzusammensetzung für Zweistufen-Leimungsverfahren, umfassend eine wäßrige polymere Emulsion, ausgewählt aus Homopolymeren oder Copolymeren von Vinylacetat, Acrylmono- und -copolymeren, und ein isocyanisches Härtungsmittel.

9. Zusammensetzung nach Anspruch 8, worin das isocyanische Härtungsmittel ein wasserkompatibles aliphatisches oder aromatisches Polyisocyanat ist.

10. Zusammensetzung nach Anspruch 8, worin das Gewichtsverhältnis zwischen der polymeren Klebstoffdispersion und dem isocyanischen Härtungsmittel im Bereich von 100:5 bis 100:20 liegt.

## Revendications

1. Procédé pour relier des livres, dans lequel le dos du livre est collé avec une formulation à application en deux étapes, dans lequel un apprêt adhésif aqueux et une composition adhésive thermofusible de finissage sont appliqués successivement à la région dorsale du bloc de livre, caractérisé en ce que l'apprêt adhésif comprend un durcisseur isocyanique.

2. Procédé suivant la revendication 1, dans lequel l'apprêt adhésif contenant le durcisseur isocyanique comprend une dispersion aqueuse d'un polymère choisi parmi des homo- et copolymères d'acétate de vinyle et des homo- et copolymères acryliques.

3. Procédé suivant la revendication 2, dans lequel l'apprêt comprend un copolymère éthylène-acétate de vinyle.

4. Procédé suivant l'une quelconque des revendications 1 à 3, dans lequel l'apprêt comprend un durcisseur isocyanique comprenant un polyisocyanate aliphatique compatible avec l'eau.

5. Procédé suivant l'une quelconque des revendications 2 à 4, dans lequel le rapport pondéral entre la dispersion d'adhésif polymérique et le durcisseur isocyanique est compris dans l'intervalle de 100:5 à 100:20.

6. Procédé suivant l'une quelconque des revendications précédentes, dans lequel la composition de finissage consiste en une composition thermofusible comprenant 20 à 65 % en poids d'un copolymère éthylénique ; 20 à 65 % en poids d'une résine d'adhésivité et 0 à 35 % en poids d'une cire ou paraffine.

7. Procédé suivant la revendication 6, dans lequel le copolymère éthylénique est choisi entre des copolymères d'éthylène avec un ou plusieurs des monomères choisis entre l'acétate de vinyle, l'acide acrylique, l'acide méthacrylique, des esters d'acide acrylique ou des esters d'acide méthacrylique.

8. Composition d'apprêt pour des procédés de collage en deux étapes, comprenant une émulsion aqueuse d'un polymère qui est choisi parmi des homopolymères ou copolymères d'acétate de vinyle et des homo- et copolymères acryliques, et un durcisseur isocyanique.

9. Composition suivant la revendication 8, dans laquelle le durcisseur isocyanique est un polyisocyanate aliphatique ou aromatique compatible avec l'eau.

10. Composition suivant la revendication 8, dans laquelle le rapport pondéral entre la dispersion d'adhésif polymérique et le durcisseur isocyanique est compris dans l'intervalle de 100:5 à 100:20.
